# EUROPEAN PATENT SPECIFICATION

(11) **EP 3 918 195 B1**
(45) Date of publication and mention of the grant of the patent: **15.02.2023**
(21) Application number: 20710826.7
(22) Date of filing: 02.03.2020
(51) Int. Cl.: F03D 9/12, F03D 13/20

(54) **FOUNDATION FOR A WIND TURBINE AND WIND TURBINE**
FUNDAMENT FÜR EINE WINDTURBINE SOWIE WINDTURBINE
FONDATION D'UNE ÉOLIENNE ET ÉOLIENNE

(30) Priority: 04.03.2019 EP 19160605
(43) Date of publication of application: 08.12.2021
(73) Proprietor: Siemens Gamesa Renewable Energy A/S, 7330 Brande (DK)
(72) Inventor: GOULD, Jon, 22043 Hamburg (DE); LLOPIS, Carlos, 22087 Hamburg (DE); WIKTOR, Samuel-Matthias, 22926 Ahrensburg (DE)
(74) Representative: SGRE-Association
(86) International application number: PCT/EP2020/055433
(87) International publication number: WO 2020/178236

(56) References cited:
- WO-A1-2009/142477
- DE-U1-202011 105 379
- FR-A1- 2 944 835
- US-A- 554 138
- US-A1- 2010 270 800

## Description

The present invention is related to a foundation for a wind turbine, especially for an onshore wind turbine. Furthermore, the invention is related to a wind turbine, especially an onshore wind turbine.

Foundations for wind turbines, especially for onshore wind turbines, are used to provide a base for a tower of the wind turbine. Usually, such foundations are made of concrete, especially reinforced concrete, or the like. These foundations comprise different zones that contribute differently to the support of the tower. Basically, such foundations comprise an outer zone and a center zone, wherein all or at least most of the load of the tower is conducted into the outer zone. Therefore, the center zone is also denoted as "non-loaded area".

Generally, center zones just exist due to simplify the design of the foundation and installation but have no particular function due to the lack of loads present. Therefore, the center zones essentially contribute to the environmental footprint as well as the costs of the wind turbine project.

Moreover, wind turbines have the disadvantage that in windy situations a surplus of electricity may be produced wherein in windless situations no electricity can be generated. This means a special challenge for the electric grid to transport and store electricity produced by wind turbines.

To relieve the grid and to provide a more constant electricity supply, there are approaches for storing electricity locally at the wind turbine. Documents US 7,608,937 B1 and US 7,265,456 B2 relate to power generation systems with wind turbine generators and batteries for storing excess electricity and providing that electricity in windless or low wind speed situations.

Batteries have the disadvantage of relatively high costs and low lifetime due to constant capacity loss. Used batteries are hazardous waste and, as a consequence, recycling of batteries is very expensive as well. Moreover, such batteries often require cooling means to prevent overheat and have to be protected from environmental influences, especially from water. Document US2010270800 A1 discloses a wind turbine foundation with an inertial energy storage system (flywheel).

Therefore, it is an object of the present invention to provide a device that does not have these drawbacks or at least partially does not have these drawbacks. In particular, it is the object of the present invention to provide a foundation for a wind turbine and a wind turbine that provides an improved storage of energy produced by the wind turbine.

This object is solved by the patent claims. Therefore, this object is solved by a foundation for a wind turbine with the features of independent claim 1, and by a method with the features of independent claim 9

. Further details of the invention unfold from the dependent claims as well as the description and the drawings.

According to a first aspect of the invention, the problem is solved by a foundation for a wind turbine, comprising base means with a center zone and an outer zone, wherein the outer zone is configured for carrying most of the weight of the wind turbine. According to the invention, in the center zone, the base means comprises a chamber, wherein the foundation further comprises energy storage means. The energy storage means comprise a flywheel pivotally arranged within the chamber for storing rotational energy and transmission means for transforming energy of a wind turbine into rotational energy of the flywheel and for transforming rotational energy of the flywheel into electrical energy.

The foundation is configured as a base for a wind turbine, especially a wind turbine with a rotor comprising rotor blades for converting wind energy into rotational energy of the rotor, a generator for converting rotational energy of the rotor into electrical energy and a tower for carrying the rotor and the generator. Therefore, the foundation is configured as a base for the tower. Preferably, the foundation comprises fixation means, such as screw holes or the like, for fixing the tower to the foundation.

The outer zone of the base means constitutes the part of the foundation that is configured for carrying all or at least most of the weight of the wind turbine. The base means or at least the outer zone of the base means is preferably made or at least essentially made of steel-concrete or the like. According to the invention, the base means and/or the foundation preferably has a cylindrical or cubical outer geometrical shape. Basically, the outer shape and size of the foundation can be identical or at least similar to foundations known from the prior art.

The chamber is provided in the center zone of the base means. The center zone is within a non-loaded area of the foundation. Therefore, due to the chamber there are no structural disadvantages compared with foundations that do not have such chamber. The chamber is preferably sealed to the environment to prevent moisture from entering the chamber. Inner walls of the chamber preferably have a smooth surface, e. g. to avoid air turbulences.

The flywheel of the energy storage means is located within the chamber and pivoted against the walls, e. g. sidewalls, floor or the like, of the chamber, especially by bearings. Thus, the flywheel can rotate freely inside the chamber. The bearings are preferably configured for minimized friction to minimize a loss of rotational energy of the rotating flywheel. An axis of rotation of the flywheel is preferably vertical or horizontal. Alternatively, the axis of rotation of the flywheel can be transversal. The flywheel preferably comprises a material with relatively high density, such as lead, iron, steel or the like. It is preferred that the flywheel is configured as a massive body. An outer surface of the flywheel is preferably relatively smooth to avoid or at least reduce turbulences. Moreover, the flywheel preferably is of a rotationally symmetrical shape. Preferably the chamber and the flywheel are configured such that a constant or at least essentially constant gap is provided between the outer surface of the flywheel and the inner walls of the chamber.

The transmission means of the energy storage means are configured for transforming energy, preferably electrical energy, of the wind turbine into rotational energy of the flywheel and for transforming rotational energy of the flywheel into electrical energy.

The foundation according to the invention has the advantage that with cost-efficient means and in a safe way, energy of a wind turbine can be temporarily stored and provided on demand. With the present invention, e. g. the scenarios smoothing power output, improving black start, enhancing performance and providing backup power can be managed.

Smoothing power output is advantageous since wind tends to blow at different wind speeds and, therefore, the amount of electrical energy that can be generated by the generator of the wind turbine is not constant. By means of the present invention, a smoothened power output of the wind turbine can be provided. Smoothing e. g. relates to meeting a certain power setpoint. This means absorbing the power above the setpoint when generation is above the setpoint, or injecting power from the storage when generation is below the setpoint. This applies to all wind speeds. This can be achieved by storing excess energy of the wind turbine in the flywheel or transforming the rotational energy of the flywheel into electrical energy on demand.

Furthermore, by means of the present invention, black start of the wind turbine can be improved. For starting the rotor of the wind turbine, inertia, friction and stiction have to be overcome. Moreover, a main application for black start is to provide the current that magnetises the generator coils in order to create the magnetic field necessary for induction. Present wind turbines need to draw electrical energy from the grid for startup. With the present invention, start-up of the rotor is even possible in situations when there is not enough electrical energy available in the grid, e. g. right after a grid outage.

Beyond that, by means of the present invention, backup power for the wind turbine can be provided. Thus, batteries are not needed anymore.

According to the invention the transmission means comprise a flywheel electric motor for transforming electrical energy into rotational energy of the flywheel. According to the invention, the transmission means can comprise more than one flywheel electric motor for driving the flywheel, e.g. for redundancy and/or boost operation, when quick transformation of the electrical energy into rotational energy is required. It is further preferred that at least one flywheel electric motor of the plurality of flywheel electric motors is mechanically separable from the flywheel and/or the plurality of electric motor by means of a clutch. By means of the flywheel electric motor, the flywheel can be rotated. Therefore, it is preferred that a motor rotor of the flywheel electric motor is mechanically coupled or at least can be mechanically coupled to the flywheel. In an alternative embodiment of the invention, the flywheel electric motor can be a part of the flywheel. A flywheel electric motor has the advantage that, by ordinary means and in a cost-effective way, transformation of electrical energy into rotational energy of the flywheel can be provided.

Advantageously, the transmission means comprise electric control means for providing electrical energy produced by a generator of the wind turbine and/or electrical energy from the grid to the flywheel electric motor. Furthermore, the electric control means is configured for providing electrical energy from a flywheel generator to the grid. Receiving the electrical energy for driving the flywheel electric motor from the generator of the wind turbine has the advantage that excess electrical energy generated by the generator can be stored as rotational energy. Receiving the electrical energy for driving the flywheel electric motor from the grid has the advantage that, by ordinary means and in a cost-effective way, excess electrical energy of the grid can be stored as rotational energy. Even in cases that a particular wind turbine is not operating, the foundation of that wind turbine still can be used for storing energy.

According to the invention, the transmission means comprise a flywheel generator for transforming rotational energy of the flywheel into electrical energy. Preferably, the flywheel generator and the flywheel electric motor are the same device. This has the advantage that investment costs and operating space can be reduced. Alternatively, flywheel generator and flywheel electric motor can be configured as different devices. This has the advantage that, by ordinary means and in a cost-effective way, technical characteristics of the flywheel generator and the flywheel electric motor can be optimized with respect to the prospective operating parameters. Thus, flywheel generator and flywheel electric motor can have different sizes.

The energy storage means comprise a clutch for mechanically separating the flywheel from transmission means of the energy storage means. It is preferred that the clutch is located between the flywheel and the flywheel electric motor and/or flywheel generator to mechanically separate the flywheel electric motor and/or flywheel generator from the flywheel. It is further preferred that the clutch is configured as magnetic clutch. A clutch has the advantage that, by ordinary means and in a cost-effective way, the flywheel can rotate freely without being mechanically coupled to the flywheel electric motor and/or the flywheel generator. Thus, mechanical losses of the rotation of the flywheel are reduced and rotational energy can be stored within the flywheel for a longer time.

It is preferred that the energy storage means comprise magnetic bearings for pivoting the flywheel with respect to the chamber. The magnetic bearings preferably comprise permanent magnets and/or magnetic coils. Preferably, the energy storage means are configured for providing the magnetic coils with electrical energy generated from the generator of the wind turbine and/or the flywheel generator and/or provided from the grid. It is further preferred that the energy storage means comprise a safety bearing to substitute the magnetic bearing in case of a technical defect, outages or the like. The magnetic bearings are preferably supported at the walls and/or the bottom of the chamber. The usage of magnetic bearings has the advantage that, by ordinary means and in a cost-effective way, friction within the energy storage means can be reduced and rotational energy can be stored within the flywheel for a longer time.

Advantageously, the chamber is configured as a vacuum chamber. This means that the chamber is configured for being sealingly closed to an environment of the foundation. It is further preferred that the foundation comprises a vacuum pump for evacuating the chamber. Preferably, the foundation comprises a pressure sensor for measuring the pressure inside the vacuum chamber. The pressure sensor is preferably connected to a pump control unit of the vacuum pump for automatically operating the pump in dependence of the measured pressure. A vacuum chamber has the advantage that, by ordinary means and in a cost-effective way, air resistance and turbulences within the chamber can be reduced and rotational energy can be stored within the flywheel for a longer time.

In a preferred embodiment of the invention, the energy storage means comprise a plurality of flywheels. The flywheels are pivotally arranged within the chamber. Preferably, the flywheels are distributed equally or symmetrically over the chamber. Preferably, the flywheels are mechanically separated from each other and can be operated independently from each other. By these means, sizes of the flywheels can be significantly smaller than the size of only one flywheel. Therefore, sizes of the flywheel electric motors and the flywheel generators can be smaller as well. A plurality of flywheels has the advantage that, by ordinary means and in a cost-effective way, storage of energy can be improved.

It is preferred that each flywheel has a cylindrical or at least substantially cylindrical shape. A substantially cylindrical shape is a cylindrical shape with one or more different areas, e. g. for coupling with the bearings. This has the advantage that, by ordinary means and in a cost-effective way, a flywheel is provided that has especially good rotating properties and can be easily fit into the chamber of the foundation.

According to a second aspect of the invention, the problem is solved by a wind turbine, comprising a rotor with rotor blades for converting wind energy into rotational energy of the rotor, a generator for converting rotational energy of the rotor into electrical energy, a tower for carrying the rotor and the generator and a foundation for carrying the tower. According to the invention, the foundation is a foundation according to the first aspect of the invention.

The rotor and the generator are preferably arranged within a rotor chamber, which is pivotally arranged at a top end of the tower. The rotor is pivotally arranged within the rotor chamber. The rotor blades are attached to the rotor and, preferably, are pivotally arranged at the rotor for adjusting a rotor blade setting angle of the rotor blades with respect to the rotor.

Preferably, the tower is configured as a hollow construction with a substantially cylindrical or conical shape. A lower part of the tower preferably has a larger diameter than a higher part of the tower. The tower can consist of more tower sections, which are connectable to each other by fasteners, such as screws, nuts and bolts, welds or the like. The tower is constructed for carrying the rotor and the generator, especially for carrying the rotor chamber.

The wind turbine according to the invention has the same advantages as the foundation according to the first aspect of the invention. Therefore, the wind turbine has the advantage that with cost-efficient means and in a safe way, electrical energy generated by the generator can be temporarily stored and provided on demand by the energy storage means. With the present invention, e. g. the scenarios smoothing power output, improving black start, enhancing performance and providing backup power can be managed.

According to a third aspect of the invention, the problem is solved by a method for storing and using energy generated by a wind turbine, especially a wind turbine according to the second aspect of the invention. The Method comprising the following steps:
- closing a clutch for coupling a flywheel of a foundation of the wind turbine with a motor rotor of a flywheel electric motor of the foundation,
- providing electrical energy produced by a generator of the wind turbine to the flywheel electric motor by electric control means of the foundation,
- operating the flywheel electric motor with the provided electrical energy and thereby generating rotational energy of the flywheel, and
- driving a flywheel generator by the rotating flywheel for converting the rotational energy of the flywheel into electrical energy,
wherein the electrical energy produced by the flywheel generator (12) is used for driving an electric motor (20) for supporting rotation of a rotor (15) of the wind turbine (2).

In an initial step, the clutch, especially a magnetic clutch, is closed. By closing the clutch, the flywheel of the foundation of the wind turbine is mechanically coupled with the motor rotor of the flywheel electric motor of the foundation.

With a closed clutch, rotational speed of the flywheel electric motor and the flywheel are within a predetermined flexibility ratio.

Wind blows with a certain wind speed or various wind speeds against the rotor blades of the rotor of the wind turbine. This causes the rotor to rotate. Since the rotor and the generator are mechanically coupled with each other, this causes the generator to generate electrical energy. At least part of this electrical energy, especially when the capacity of the grid is at its limit, is provided to the flywheel electric motor.

By providing the electrical energy the flywheel electric motor, the motor rotor of the flywheel electric motors starts rotating. Since the clutch is closed, this will drive the flywheel to rotate. Thus, the electrical energy is converted into rotational energy.

In case it is intended to store the rotational energy of the flywheel for a longer period, it is preferred that the clutch is opened. Thus, there the flywheel can rotate freely with minimized energy loss. For converting the rotational energy back into electrical energy, the clutch has to be closed again.

Subsequently, the flywheel is coupled with the flywheel generator such that the flywheel and the flywheel generator are within a predetermined flexibility ratio. This is preferably implemented by the clutch, especially the same clutch that has been closed in the initial method step. By these means, rotational energy of the flywheel is converted by the flywheel generator into electrical energy.

The method according to the invention has the same advantages as the foundation according to the first aspect of the invention and the wind turbine according to the second step of the invention. Therefore, the inventive method for storing and using energy generated by a wind turbine has the advantage that with cost-efficient means and in a safe way, electrical energy generated by the generator can be temporarily stored and provided on demand by the energy storage means. With the present invention, e. g. the scenarios smoothing power output, improving black start, enhancing performance and providing backup power can be managed.

Finally, according to the invention the electrical energy produced by the flywheel generator is used for driving an electric motor for supporting rotation of a rotor of the wind turbine. The electric motor can be the generator of the wind turbine. This step is especially performed in a situation when the rotor of the wind turbine is not rotating and has to be accelerated to an operating rotational speed. This operation is also called "black start". However, this step can be performed to support an already rotating rotor, e. g. when there are gusty or intermittent winds in order to prevent an unintentional stopping of the rotor. This has the advantage that, by ordinary means and in a cost-effective way, the efficiency of the wind turbine can be enhanced.

Further advantages, features and details of the invention unfold from the following description, in which by reference to drawings working examples of the present invention are described in detail.

In the drawings:
- Figure 1: shows a schematic side view of a prior art foundation of a wind turbine,
- Figure 2: shows a schematic sectional side view of a preferred first embodiment of the invention,
- Figure 3: shows a schematic perspective view of a first configuration of the invention,
- Figure 4: shows a schematic perspective view of a second configuration of the invention,
- Figure 5: shows a schematic side view of an electric configuration according to the invention,
- Figure 6: shows a schematic sectional side view of a preferred second embodiment of the invention,
- Figure 7: shows a schematic side view of a preferred embodiment of a wind turbine according to the invention, and
- Figure 8: shows a schematic flow plan of a preferred embodiment of the method according to the invention.

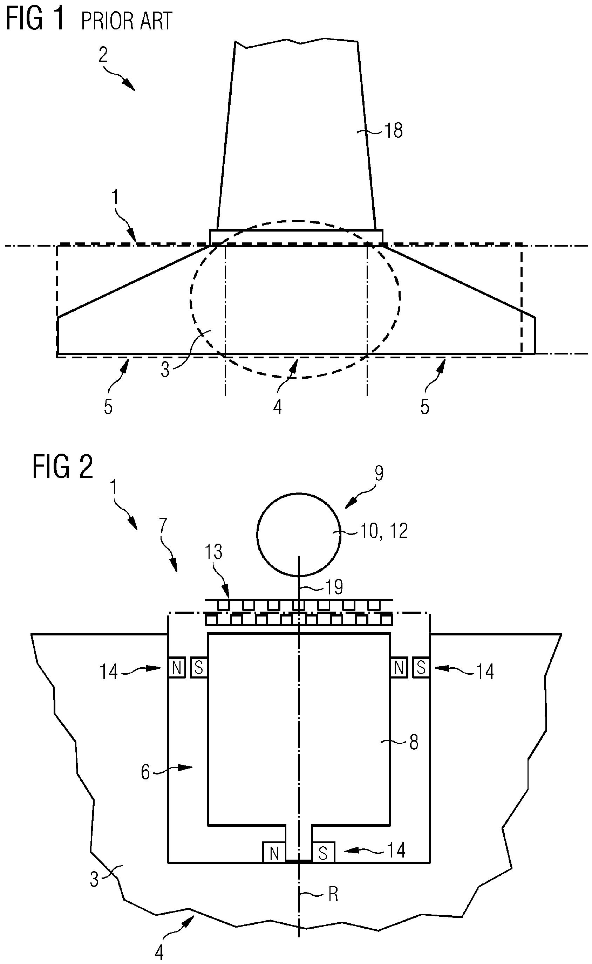

Elements with the same function and effectiveness are denoted each in figures 1 to 8 with the same reference numbers.

In Fig. 1, a prior art foundation 1 of a wind turbine 2 is shown in a schematic side view. The foundation 1 comprises a base means 3 with a center zone 4 and an outer zone 5. On the center zone 4 a tower 18 of the wind turbine 2 is mounted. Basically all of the load of the tower 18 is carried by the outer zone 5, wherein the inner zone 4 is a non-working load area. The base means 3 of the foundation 1 is configured as a solid steel-concrete block with an inclined upper surface in the outer zone 5 and a horizontal upper surface in the center zone 4.

Fig. 2 shows a preferred first embodiment of the invention in a schematic sectional side view. In this figure, the center zone 4 of the base means 3 of the foundation 1 is shown in detail, wherein the outer zone 5 is cut-off for reasons of better overview. The foundation 1 of the wind turbine 2 comprises base means 3 that preferably comprise or consist of concrete, steel-concrete or the like. In the center zone 4 of the foundation 1, energy storage means 7 of the foundation 1 are located. The energy storage means 7 located inside a chamber 6 that is formed within the base means 3. The energy storage means 7 comprise a flywheel 8 with a vertical rotation axis R. The flywheel 8 has a substantially cylindrical shape. The flywheel 8 is pivotally arranged within the chamber 6 by means of magnetic bearings 14 on the sides and the bottom of the flywheel 8, supporting the flywheel 8 against inner walls of the chamber 6. The energy storage means 7 further comprise transmission means 9, comprising a flywheel electric motor 10 with a motor rotor 19 and a clutch 13, configured as magnetic clutch 13, for mechanically connecting and disconnecting the motor rotor 19 with the flywheel 8. The flywheel electric motor 10 is further configured as flywheel generator 12. By means of the flywheel electric motor 10, the flywheel 8 can be rotated to convert electric energy into rotational energy. By means of the flywheel generator 12, the rotational energy of the flywheel 8 can be converted into electric energy.

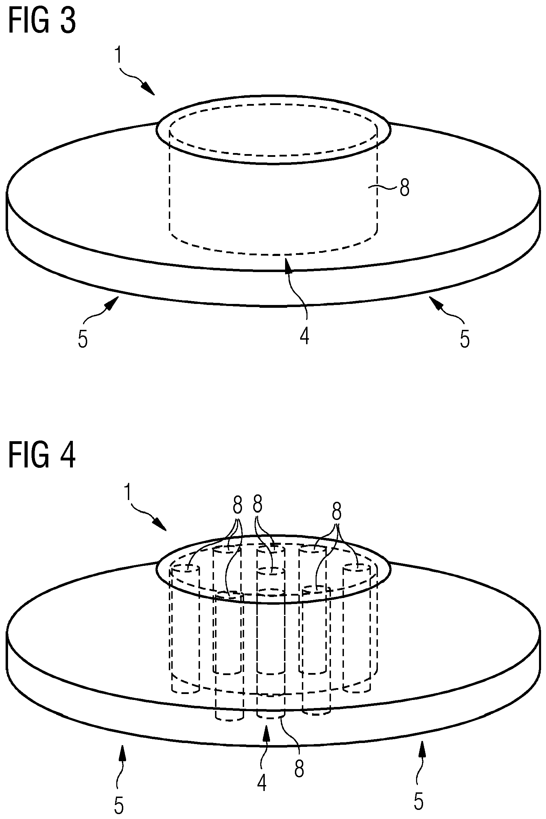

In Fig. 3, a first configuration of the invention is shown in a schematic perspective view. In this first configuration, the foundation 1 comprises just one single flywheel 8, pivotally arranged in the center zone 4. The flywheel 8 has a substantially cylindrical shape and is of a size to almost completely fill the center zone 4.

In Fig. 4, a second configuration of the invention is shown in a schematic perspective view. In this second configuration, the foundation 1 comprises nine flywheels 8, pivotally arranged in the center zone 4. The flywheels are evenly distributed over the center zone 4, wherein one flywheel 8 is located in the middle axis of the center zone 4 and the other eight flywheels 8 are evenly distributed along a circle around the middle axis. The flywheels 8 have a substantially cylindrical shape, wherein the diameter of the flywheels 8 according to the second configuration are much smaller than the diameter of the flywheel 8 according to the first configuration as shown in Fig. 3.

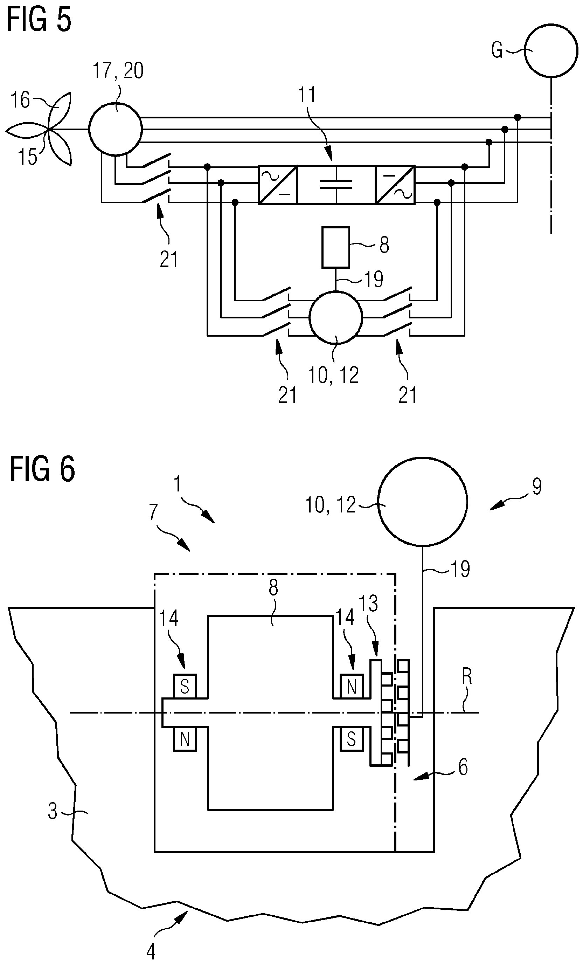

Fig. 5 shows an electric configuration according to the invention in a schematic perspective view. The flywheel 8 is connected with the flywheel electric motor 10, wherein the flywheel electric motor 10 is configured as flywheel generator 12. A clutch 13 is not illustrated in this figure, however, it is preferred that there is a clutch 13 between the flywheel 8 and the motor rotor 19. A rotor 15 with rotor blades 16 is mechanically connected with a generator 17. The generator 17 is configured for transforming rotational energy of the rotor 15 into electrical energy. The generator 17 is further configured as an electric motor 20 for driving the rotor 15. The generator 17 is connect ed via electric lines and an electric control means 11 to a grid G and to the flywheel motor 10. The electric configuration comprises several electric switches 21 for switching between different operation configurations, such as driving the flywheel 8 with the flywheel motor 10, generating electricity with the flywheel generator 12 for driving the electric motor 20 for driving the rotor 15 or providing electricity to the grid G.

In Fig. 6, a preferred second embodiment of the invention is shown in a schematic side view. In this figure, the center zone 4 of the base means 3 of the foundation 1 is shown in detail, wherein the outer zone 5 is cut-off for reasons of better overview. The foundation 1 of the wind turbine 2 comprises base means 3 that preferably comprise or consist of concrete, steel-concrete or the like. In the center zone 4 of the foundation 1, energy storage means 7 of the foundation 1 are located. The energy storage means 7 located inside a chamber 6 that is formed within the base means 3. The energy storage means 7 comprise a flywheel 8 with a horizontal rotation axis R. The flywheel 8 has a substantially cylindrical shape. The flywheel 8 is pivotally arranged within the chamber 6 by means of magnetic bearings 14 on the sides of the flywheel 8, supporting the flywheel 8 against inner walls of the chamber 6. The energy storage means 7 further comprise transmission means 9, comprising a flywheel electric motor 10 with a motor rotor 19 and a clutch 13, configured as magnetic clutch 13, for mechanically connecting and disconnecting the motor rotor 19 with the flywheel 8. The flywheel electric motor 10 is further configured as flywheel generator 12. By means of the flywheel electric motor 10, the flywheel 8 can be rotated to convert electric energy into rotational energy. By means of the flywheel generator 12, the rotational energy of the flywheel 8 can be converted into electric energy.

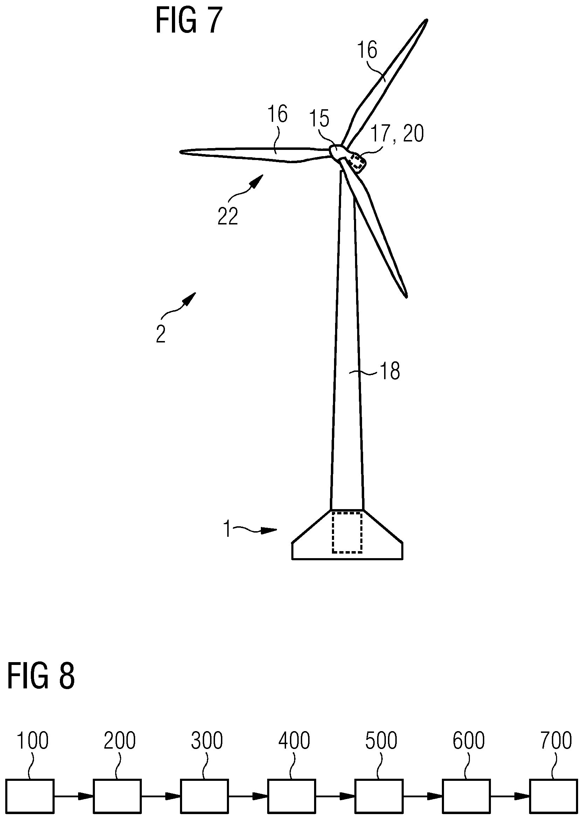

Fig. 7 shows a preferred embodiment of a wind turbine 2 according to the invention in a schematic side view. The wind turbine 2 comprises a foundation 1, a tower 18 and a rotor unit 22 with a rotor 15, rotor blades 16 and a generator 17 that is configured as electric motor 20 as well. The tower 18 is mounted onto the foundation 1. The rotor unit 22 is mounted onto an upper end of the tower 18.

In Fig. 8, a preferred embodiment of the method according to the invention is shown in a schematic flow plan. In a first step 100, a clutch 13 is closed. Thereby, a flywheel 8 of a foundation 1 of the wind turbine 2 is mechanically coupled with a motor rotor 19 of a flywheel electric motor 10 of the foundation 1. In a second step 200, electrical energy produced by a generator 17 of the wind turbine 2 is provided to the flywheel electric motor 10 by electric control means 11 of the foundation 1. In a third step 300, the flywheel electric motor 10 is operated with the provided electrical energy. By these means, electrical energy is converted into rotational energy of the flywheel 8. In a fourth step 400, the clutch 13 is opened. As a result, the flywheel 8 is mechanically uncoupled from the motor rotor 19 and can rotate freely. In this state, the flywheel 8 can rotate for several hours, storing rotational energy. In a fifth step 500, the clutch 13 is closed again and the flywheel 8 is mechanically coupled with the motor rotor 19 again. The fifth step 500 is preferably initiated, when wind speeds are not sufficient or unsteady for driving the rotor 15, the rotor 15 shall be started and/or there is demand for electrical energy by the grid G. In a sixth step 600, the flywheel generator 12 generates electrical energy by converting rotational energy of the flywheel 8. In a seventh step 700, the generated electrical energy is provided to the electric motor 20 for driving the rotor 15 and/or to the grid G for providing the grid with electrical energy. For providing the grid G witch electrical energy, preferably a converter is used to condition the power generated by the flywheel so that it matches the grid requirements.

## Claims

1. Foundation (1) for a wind turbine (2), comprising base means (3) with a center zone (4) and an outer zone (5), wherein the outer zone (5) is configured for carrying all of the weight of the wind turbine (2), wherein in the center zone (4), the base means (3) comprise a chamber (6), wherein the foundation (1) further comprises energy storage means (7), wherein the energy storage means (7) comprise a flywheel (8) pivotally arranged within the chamber (6) for storing rotational energy, and wherein the energy storage means (7) further comprise transmission means (9) for transforming energy of a wind turbine (2) into rotational energy of the flywheel (8) and for transforming rotational energy of the flywheel (8) into electrical energy, wherein the transmission means (9) comprise a flywheel electric motor (10) for transforming electrical energy into rotational energy of the flywheel (8), **characterized in that** the transmission means (9) comprise electric control means (11) for providing electrical energy from the grid (G) to the flywheel electric motor (10).

2. Foundation (1) according to claim 1,
**characterized in**
**that** the transmission means (9) comprise a flywheel generator (12) for transforming rotational energy of the flywheel (8) into electrical energy.

3. Foundation (1) according to claim 1 or 2,
**characterized in**
**that** the energy storage means (7) comprise a clutch (13) for mechanically separating the flywheel (8) from transmission means (9) of the energy storage means (7).

4. Foundation (1) according to any of the previous claims,
**characterized in**
**that** the energy storage means (7) comprise magnetic bearings (14) for pivoting the flywheel (8) with respect to the chamber (6).

5. Foundation (1) according to any of the previous claims,
**characterized in**
**that** the chamber (6) is configured as a vacuum chamber (6).

6. Foundation (1) according to any of the previous claims,
**characterized in**
**that** the energy storage means (7) comprise a plurality of flywheels (8).

7. Foundation (1) according to any of the previous claims,
**characterized in**
**that** each flywheel (8) has a cylindrical or at least substantially cylindrical shape.

8. Wind turbine (2), comprising a rotor (15) with rotor blades (16) for converting wind energy into rotational energy of the rotor (15), a generator (17) for converting rotational energy of the rotor (15) into electrical energy, a tower (18) for carrying the rotor (15) and the generator (17) and a foundation (1) for carrying the tower (18),
**characterized in**
**that** the foundation (1) is a foundation (1) according to any of the previous claims.

9. Method for storing and using energy generated by a wind turbine (2) comprising the following steps:
- closing a clutch (13) for coupling a flywheel (8) of a foundation (1) of the wind turbine (2) with a motor rotor (19) of a flywheel electric motor (10) of the foundation (1),
- providing electrical energy produced by a generator (17) of the wind turbine (2) to the flywheel electric motor (10) by electric control means (11) of the foundation (1),
- operating the flywheel electric motor (10) with the provided electrical energy and thereby generating rotational energy of the flywheel (8), and
- driving a flywheel generator (12) by the rotating flywheel (8) for converting the rotational energy of the flywheel (8) into electrical energy,
**characterized in that** the electrical energy produced by the flywheel generator (12) is used for driving an electric motor (20) for supporting rotation of a rotor (15) of the wind turbine (2).

## Patentansprüche

1. Fundament (1) für eine Windkraftanlage (2), Gründungsmittel (3) mit einer Mittelzone (4) und einer Außenzone (5) umfassend, wobei die Außenzone (5) dafür gestaltet ist, das gesamte Gewicht der Windkraftanlage (2) zu tragen, wobei die Gründungsmittel (3) in der Mittelzone (4) eine Kammer (6) umfassen, wobei das Fundament (1) ferner Energiespeichermittel (7) umfasst, wobei die Energiespeichermittel (7) ein Schwungrad (8) umfassen, das zum Speichern von Rotationsenergie drehbar in der Kammer (6) angeordnet ist, und wobei die Energiespeichermittel (7) ferner Übertragungsmittel (9) zum Umwandeln von Energie einer Windkraftanlage (2) in Rotationsenergie des Schwundrades (8) und zum Umwandeln von Rotationsenergie des Schwundrades (8) in Elektroenergie umfassen, wobei die Übertragungsmittel (9) einen Schwungrad-Elektromotor (10) zum Umwandeln von Elektroenergie in Rotationsenergie des Schwungrades (8) umfassen,
**dadurch gekennzeichnet, dass** die Übertragungsmittel (9) elektrische Steuermittel (11) zum Bereitstellen von Elektroenergie aus den Netz (G) für den Elektromotor (10) umfassen.

2. Fundament (1) nach Anspruch 1,
**dadurch gekennzeichnet,**
**dass** die Übertragungsmittel (9) einen Schwungradgenerator (12) zum Umwandeln von Rotationsenergie des Schwungrades (8) in Elektroenergie umfassen.

3. Fundament (1) nach Anspruch 1 oder 2,
**dadurch gekennzeichnet,**
**dass** die Energiespeichermittel (7) eine Kupplung (13) zum mechanischen Trennen des Schwungrades (8) von den Übertragungsmitteln (9) des Energiespeichermittels (7) umfassen.

4. Fundament (1) nach einem der vorhergehenden Ansprüche,
**dadurch gekennzeichnet,**
**dass** die Energiespeichermittel (7) Magnetlager (14) zum Drehen des Schwungrades (8) im Verhältnis zur Kammer (6) umfassen.

5. Fundament (1) nach einem der vorhergehenden Ansprüche,
**dadurch gekennzeichnet,**
**dass** die Kammer (6) als eine Unterdruckkammer (6) gestaltet ist.

6. Fundament (1) nach einem der vorhergehenden Ansprüche,
**dadurch gekennzeichnet,**
**dass** die Energiespeichermittel (7) mehrere Schwungräder (8) umfassen.

7. Fundament (1) nach einem der vorhergehenden Ansprüche,
**dadurch gekennzeichnet,**
**dass** jedes Schwungrad (8) eine zylindrische oder eine im Wesentlichen zylindrische Form aufweist.

8. Windkraftanlage (2), einen Rotor (15) mit Rotorblättern (16) zum Umwandeln von Windenergie in Rotationsenergie des Rotors (15), einen Generator (17) zum Umwandeln der Rotationsenergie des Rotors (15) in Elektroenergie, einen Turm (18) zum Tragen des Rotors (15) und des Generators (17) und ein Fundament (1) zum Tragen des Turms (18) umfassend,
**dadurch gekennzeichnet,**
**dass** das Fundament (1) ein Fundament (1) nach einem der vorhergehenden Ansprüche ist.

9. Verfahren zum Speichern und Verwenden von Energie, die durch eine Windkraftanlage (2) erzeugt wird, die folgenden Schritte umfassend:
Schließen der Kupplung (13), um das Schwungrad (8) eines Fundaments (1) der Windkraftanlage (2) mit einem Motorrotor (19) eines Schwungrad-Elektromotors (10) des Fundaments (1) zu kuppeln,
Bereitstellen von Elektroenergie, die von einem Generator (17) der Windkraftanlage (2) erzeugt wird, für den Schwungrad-Elektromotor (10) durch elektrische Steuermittel (11) des Fundaments (1),
Betreiben des Schwungrad-Elektromotors (10) mit der bereitgestellten Elektroenergie und dadurch Erzeugen von Rotationsenergie des Schwungrades (8), und
Antreiben eines Schwungradgenerators (12) durch das drehende Schwungrad (8), um die Rotationsenergie des Schwungrades (8) in Elektroenergie umzuwandeln,
**dadurch gekennzeichnet,**
**dass** die durch den Schwungradgenerator (12) erzeugte Elektroenergie verwendet wird, um einen Elektromotor (20) zum Unterstützen der Rotation eines Rotors (15) der Windkraftanlage (2) anzutreiben.

## Revendications

1. Fondation (1) pour une éolienne (2), comprenant des moyens formant base (3) ayant une zone centrale (4) et une zone externe (5), dans laquelle la zone externe (5) est configurée pour soutenir la totalité du poids de l'éolienne (2), dans laquelle dans la zone centrale (4), les moyens formant base (3) comprennent une chambre (6), dans laquelle la fondation (1) comprend en outre des moyens de stockage d'énergie (7), dans laquelle les moyens de stockage d'énergie (7) comprennent un volant d'inertie (8) agencé de manière pivotante à l'intérieur de la chambre (6) pour stocker de l'énergie de rotation, et dans laquelle les moyens de stockage d'énergie (7) comprennent en outre des moyens de transmission (9) pour transformer l'énergie d'une éolienne (2) en énergie de rotation du volant d'inertie (8) et pour transformer l'énergie de rotation du volant d'inertie (8) en énergie électrique, dans laquelle les moyens de transmission (9) comprennent un moteur électrique de volant d'inertie (10) pour transformer de l'énergie électrique en énergie de rotation du volant d'inertie (8), **caractérisée en ce que** les moyens de transmission (9) comprennent des moyens de commande électrique (11) pour fournir de l'énergie électrique, du réseau (G) au moteur électrique de volant d'inertie (10).

2. Fondation (1) selon la revendication 1,
**caractérisée en ce que**
les moyens de transmission (9) comprennent un générateur de volant d'inertie (12) pour transformer l'énergie de rotation du volant d'inertie (8) en énergie électrique.

3. Fondation (1) selon la revendication 1 ou 2,
**caractérisée en ce que**
les moyens de stockage d'énergie (7) comprennent un embrayage (13) pour séparer mécaniquement le volant d'inertie (8) par rapport aux moyens de transmission (9) des moyens de stockage d'énergie (7).

4. Fondation (1) selon l'une quelconque des revendications précédentes,
**caractérisée en ce que**
les moyens de stockage d'énergie (7) comprennent des paliers magnétiques (14) pour faire pivoter le volant d'inertie (8) par rapport à la chambre (6).

5. Fondation (1) selon l'une quelconque des revendications précédentes,
**caractérisée en ce que**
la chambre (6) est configurée comme une chambre à vide (6).

6. Fondation (1) selon l'une quelconque des revendications précédentes,
**caractérisée en ce que**
les moyens de stockage d'énergie (7) comprennent une pluralité de volants d'inertie (8).

7. Fondation (1) selon l'une quelconque des revendications précédentes,
**caractérisée en ce que**
chaque volant d'inertie (8) possède une forme cylindrique ou au moins sensiblement cylindrique.

8. Éolienne (2), comprenant un rotor (15) ayant des pales de rotor (16) pour convertir de l'énergie éolienne en énergie de rotation du rotor (15), un générateur (17) pour convertir l'énergie de rotation du rotor (15) en énergie électrique, une tour (18) pour soutenir le rotor (15) et le générateur (17) et une fondation (1) pour soutenir la tour (18),
**caractérisée en ce que**
la fondation (1) est une fondation (1) selon l'une quelconque des revendications précédentes.

9. Procédé pour le stockage et l'utilisation de l'énergie générée par une éolienne (2) comprenant les étapes suivantes :
- la fermeture d'un embrayage (13) pour coupler un volant d'inertie (8) d'une fondation (1) de l'éolienne (2) avec un rotor de moteur (19) d'un moteur électrique de volant d'inertie (10) de la fondation (1),
- la fourniture de l'énergie électrique produite par un générateur (17) de l'éolienne (2) au moteur électrique de volant d'inertie (10) par des moyens de commande électrique (11) de la fondation (1),
- la mise en fonctionnement du moteur électrique de volant d'inertie (10) avec l'énergie électrique fournie et ainsi la génération d'énergie de rotation du volant d'inertie (8), et
- l'entraînement du générateur de volant d'inertie (12) par le volant d'inertie (8) en rotation pour convertir l'énergie de rotation du volant d'inertie (8) en énergie électrique, **caractérisé en ce que**
l'énergie électrique produite par le générateur de volant d'inertie (12) est utilisée pour entraîner un moteur électrique (20) pour accompagner la rotation d'un rotor (15) de l'éolienne (2) .
